# EUROPÄISCHE PATENTSCHRIFT

(11) **EP 1 477 094 B1**
(45) Veröffentlichungstag und Bekanntmachung des Hinweises auf die Patenterteilung: **07.11.2007**
(21) Anmeldenummer: 04011462.1
(22) Anmeldetag: 13.05.2004
(51) Int. Cl.: A47J 31/52, A47J 31/40

(54) **Getränkesystem**
Beverage system
Système de boissons

(30) Priorität: 16.05.2003 DE 20307666 U
(43) Veröffentlichungstag der Anmeldung: 17.11.2004
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE)
(74) Vertreter: Grünecker, Kinkeldey, Stockmair & Schwanhäusser Anwaltssozietät

(56) Entgegenhaltungen:
- EP-A- 0 972 481
- EP-A- 1 269 899
- CA-A- 2 346 550
- US-A1- 2002 134 831

## Beschreibung

Die Erfindung bezieht sich auf ein Getränkesystem der im Oberbegriff von Anspruch 1 erläuterten Art.

Ein derartiges Getränkesystem ist aus der CA-A-2 346 550 bekannt. Das bekannte Getränkesystem enthält eine Ausgabeeinrichtung für eine Mehrzahl von verschiedenen Getränken und ein Gefäß mit einer Codierung. Es ist eine Programmiereinrichtung vorgesehen, mit der der Benutzer einen bestimmten Getränkewunsch und den Wunsch nach bestimmten Zusätzen wie beispielsweise Milch oder Zucker einem bestimmten Gefäß zuordnen kann, so dass das Gefäß nur in die Ausgabeeinrichtung eingebracht werden muss, um mit immer dem gleichen Getränke gefüllt zu werden. Die Zuordnung eines bestimmten Getränks zu einem bestimmten Gefäß kann geändert werden. Die Getränke und die Zusätze werden jedoch immer gesäß festen vorbestimmten Parametern zubereitet und ausgegeben.

Ein weiteres Getränkesystem ist aus der EP 972 481 A1 bekannt. Das bekannte Getränkesystem ist als Kaffeemaschine ausgebildet, die ein Gehäuse mit einer Vielzahl von Auslässen für verschiedene Getränke oder Getränkebestandteile umfasst. Das System enthält weiterhin Gefäße wie beispielsweise Tassen, die mit einer Codierung versehen sind. Die Kaffeemaschine enthält ein Lesegerät für die Codierung und eine Zuordnungseinrichtung, mit der die Codierung einem bestimmten Auslass der Kaffeemaschine und einem bestimmten Ausgabevorgang für ein bestimmtes Getränk oder einen bestimmten Getränkebestandteil zuzuordnen ist. Mit dieser Ausgestaltung soll sichergestellt werden, dass ein Benutzer ein nur für ein bestimmtes Getränk, beispielsweise wegen des größeren oder kleineren Volumens, geeignetes Gefäß für das bestimmte Getränke verwendet und/oder dieses Gefäß unter den korrekten Auslass stellt. Die Kaffeemaschine ist zu diesem Zweck so programmiert, dass sie selbsttätig, d.h. ohne Tastendruck durch den Benutzer, den entsprechenden Ausgabevorgang, und gegebenenfalls auch den Zubereitungsvorgang, durchführt, sobald eine korrekte Tasse unter den zugeordneten Auslass gestellt wurde.

Die Codierung ist bevorzugt ein Strichcode; es kann jedoch auch ein Magnetstreifen verwendet werden, der an einer Kasse oder dgl. mit der nötigen Information geladen wird, wobei auf dem Magnetstreifen im Prinzip auch die Anzahl der bezahlten und auszugebenden Füllmenge registriert und nach dem Ausgeben beim Gerät um eine Füllmenge abgezogen werden.

Ein ähnliches Getränkesystem ist weiterhin aus der US 5 566 731 A bekannt. Das bekannte Getränkesystem ist allein zum Ausgeben von Getränke bestimmt und weist das eigentliche Ausgabegerät und mit Codierungen versehene Behälter auf. Die durch die Codierung vermittelten Informationen betreffen einerseits das Volumen des bestimmten Behälters, so dass automatisch eine an die Größe des Behälters angepasste Getränkemenge ausgegeben wird, und die Anzahl der Befüllvorgänge, wobei jeder Behälter nur einmal befüllt werden darf. Die Anzahl der Ausgabevorgänge für jedes bestimmte Volumen werden für Buchhaltungs- und Lagerhaltungszwecke gespeichert.

Ein weiteres ähnliches Getränkesystem ist aus der DE 41 03 820 A1 bekannt. Auch dieses Getränkesystem betrifft eine Kaffeemaschine zum Zubereiten unterschiedlicher Getränke und codierte Behälter. Die Codierungen beziehen sich auf ein bestimmtes Getränk, das allein in diesen Behälter gelangen soll. Die Steuereinrichtung der Kaffeemaschine ist so ausgelegt, dass nur ein bestimmtes Getränk in einen bestimmten Behälter gelangt, egal unter welchen Auslass dieser Behälter gestellt wurde. Die bekannte Kaffeemaschine enthält weiterhin Wahltasten zum Programmieren der Einheit im Hinblick auf Produkt- und Mengenauswahl sowie zum Überlagern der durch die Codierung bewirkten Steuerung der Zubereitungs- und Ausgabevorgänge.

Bei allen bekannten Getränkesystemen ist die Zuordnung der Codierung zu einem bestimmten Ausgabevorgang starr und vorab festgelegt, d.h. diese Zuordnung kann gegebenenfalls überlagert aber nicht verändert werden. Folgerichtig sind die bekannten Getränkesysteme für eine Vereinfachung und Erleichterung der Abgabe von Getränke ausgelegt und insbesondere an eine Verwendung in Selbstbedienungsrestaurants mit laufend wechselnden Kunden oder in Restaurants oder ähnlichen Einrichtungen, in denen ein Bedienungspersonal zur Verfügung steht, angepasst.

Wird jedoch ein gleichbleibender Kundenstamm mit Getränken versorgt, wie dies beispielsweise in Büros, Betrieben oder dgl. der Fall ist, so haben die Benutzer meist Individualtassen. Weiterhin tendiert der Kundengeschmack zunehmend in Richtung auf individuelle Vorlieben, beispielsweise im Hinblick auf die Stärke des Getränks, die zur Verfügung stehende Menge oder das Mischungsverhältnis bei Mischgetränken, und es ist eine Tendenz zu beobachten, einerseits über eine vorbestimmte Zeitspanne konservativ an diesen Vorlieben festzuhalten, andererseits jedoch von Zeit zu Zeit etwas Neues ausprobieren zu wollen.

Der Erfindung liegt die Aufgabe zugrunde, ein Getränkesystem bereitzustellen, das diesen Erfordernissen Rechnung trägt.

Die Aufgabe wird durch das im Anspruch 1 beschriebene Getränkesystem gelöst.

Durch die erfindungsgemäße Ausgestaltung wird ein Getränkesystem geschaffen, das es gestattet, dass jeder Benutzer einerseits seine eigene Tasse verwenden kann und andererseits jedoch seine Vorlieben problemlos ändern kann. Damit ist es möglich, die Codierung benutzerorientiert auszugestalten, so dass es möglich ist, Getränkeparameter, beispielsweise das Ausgabevolumen, die Trinkstärke, das Mischungsverhältnis bei Mischgetränke bsw., entweder anstelle von vorab festgelegten Parametern oder zusätzlich zu vorab festgelegten Parametern frei wählen zu können.

Vorteilhafte Ausführungsbeispiele der Erfindung sind den Unteransprüchen zu entnehmen.

Ein Ausführungsbeispiel der Erfindung wird nachfolgend anhand der einzigen Figur erläutert, die ein Ausführungsbeispiel eines erfindungsgemäßen Getränkesystems in stark schematischer Darstellung zeigt.

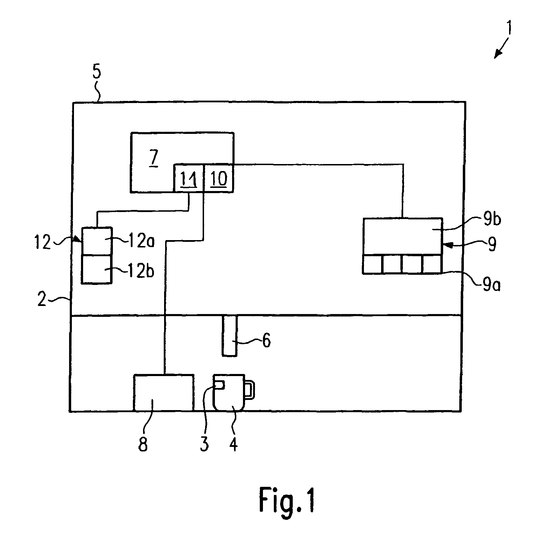

Fig. 1 zeigt ein Getränkesystem 1, das aus einem Ausgabegerät 2 und einer Vielzahl von mit jeweils einer Codierung 3 versehenen Gefäßen 4 besteht. Als Gefäß 4 werden bevorzugt Individualtassen verwendet, d.h. jeder Benutzer hat seine eigene mit der Codierung 3 versehene Tasse 4.

Die Codierung 3 kann jede maschinell lesbare Codierung sein, beispielsweise ein Transponder, ein Strichcode, ein "beschreibbarer" Magnetstreifen, eine identifizierbare Farbcodierung oder dgl. Die Codierung 3 kann bevorzugt in Form eines Streifens oder Rings auf das Gefäß 4 aufgeklebt oder auf andere Weise befestigt werden oder in das Gefäß 4 integriert sein. Es ist jedoch auch möglich, jedem Benutzer eine Art Codierungskarte auszuhändigen, die er dann in Verbindung mit seiner Tasse 4 verwendet.

Das Ausgabegerät 2 ist im dargestellten Ausführungsbeispiel als Kaffeemaschine ausgebildet, die in der Lage ist, eine Vielzahl von verschiedenen Kaffeesorten mit unterschiedlichen Verfahrensparametern herzustellen, wie dies im Stand der Technik bekannt ist. Derartige Kaffeemaschinen sind beispielsweise in der Lage, Kaffee vom Filterkaffeetyp oder vom Espressotyp herzustellen, diesen in verschieden großen Volumenmengen und, insbesondere bei den espressoartigen Kaffeetypen, mit unterschiedlichen Trinkstärken (gestreckt, doppelt), auszugeben, sowie weiterhin heißes Wasser, heiße Milch und/oder heißen Milchschaum automatisch zuzubereiten und auszugeben. Die Zubereitung und Ausgabe erfolgt nach vorbestimmten Parametern, beispielsweise der Brühtemperatur, der Menge und der Art des eingesetzten Kaffeemehls, dessen Ausmahlgrad usw. Diese Parameter sind gewöhnlich für jede Getränkeart optimiert. Der Begriff "Getränk" soll somit für die Zwecke der vorliegenden Erfindung sowohl reine Getränke als auch Getränkebestandteile umfassen.

Das Ausgabegerät 2 weist ein Gehäuse 5 auf, aus dem ein Auslass 6 herausführt, unter den das Gefäß 4 gestellt werden kann. Im Inneren des Gehäuses ist eine Steuerung 7 vorgesehen, die die nicht dargestellten Vorrichtungen zum Zubereiten und Ausgeben der verschiedenen Getränkesorten steuert.

In der Nähe des Auslasses 6 und an einer Stelle, an der in jedem Falle die Codierung 3 gelesen werden kann, wenn das Gefäß 4 unter dem Auslass 6 steht, ist ein Lesegerät 8 zum Lesen der Informationen der Codierung 3 vorgesehen. Das Lesegerät 8 steht mit der Steuerung 7 in Verbindung und übermittelt die Informationen der Codierung 3 an das Steuergerät 7. Es ist weiterhin möglich, dass das Lesegerät 8 die Zubereitung und/oder Ausgabe des gewählten Getränks veranlasst, ohne dass der Benutzer einen weiteren Wahlknopf drücken muss, wie dies auch im Stand der Technik der Fall ist.

Außen am Gehäuse 5 ist eine benutzerzugängliche Programmiereinrichtung 9 vorgesehen, die in üblicher Weise ausgestaltet ist, also beispielsweise ein Tastenfeld 9a und ein Display 9b aufweist. Mit Hilfe der Programmiereinrichtung 9 ist der Benutzer in der Lage, die vom Lesegerät 8 an die Steuerung 7 übermittelten Informationen der Codierung 3 mit Hilfe einer Zuordnungseinrichtung 10 mit den vom Benutzer über die Programmiereinrichtung 9 eingegebenen Informationen über gewünschte Getränkeparameter zu verknüpfen. Auf diese Weise wird ein bestimmtes Gefäß 4 immer mit dem vom Benutzer über die Programmierung 9 eingegebenen Getränk gefüllt.

Im einfachsten Fall gestattet die Programmierung 9 eine Auswahl unter verschiedenen Getränke oder Getränkemischungen, die nach vorgegebenen, fest eingestellten Parametern zubereitet werden. Es ist jedoch auch möglich, die Programmiereinrichtung 9 so auszugestalten, dass der Benutzer, bevorzugt innerhalb bestimmter Parameterbereiche, die Getränkeparameter frei einstellen kann. Dies betrifft bevorzugt Mischungsverhältnisse, beispielsweise zwischen Milch und Kaffee bzw. Tee, Milchschaum und Kaffee oder, wenn als Ausgabegerät ein Getränkeautomat eingesetzt wird, zwischen karbonisiertem Wasser und Fruchtsaft, zwischen zwei verschiedenen Fruchtsäften usw. Aber auch die Volumenmenge wäre ohne weiteres durch die Programmiereinrichtung 9 frei wählbar auszugestalten.

Die Steuereinrichtung 7 enthält weiterhin eine Speichereinrichtung 11, mit der die über die Programmiereinrichtung 9 eingestellten Parameter für das Getränk und deren Zuordnung zu einer Codierung 3 eines bestimmten Gefäßes 4 gespeichert werden. Bei Verwendung eines Transponders können diese Informationen auch an der Tasse gespeichert werden.

Die durch die Codierung 3 vermittelten Informationen hängen zum einen von der Art der verwendeten Codierung ab. Wird eine nicht-programmierbare Codierung, wie beispielsweise ein Strichcode, eine Farbcodierung oder dgl. verwendet, so muss die Codierung einer Identifikation des ganz bestimmten Gefäßes 4 innerhalb der Vielzahl der im Getränkesystem verwendeten Gefäße 4 gestatten. Dieser Information wird dann mit den vom Benutzer dieses Gefäßes 4 einprogrammierten Getränkewünschen verknüpft. Wird eine beschreibbare Codierung verwendet, wie beispielsweise ein Transponder, so ist es im einfachsten Fall ausreichend, wenn die Codierung Informationen über den einprogrammierten Getränkewunsch enthält, vorausgesetzt, der Benutzer, der diesen Getränkewunsch einprogrammiert hat, erkennt seine Tasse an anderen Merkmalen wieder.

Bei Anwendungsfällen, in denen der Benutzer die entnommenen Getränke bezahlt, kann in das erfindungsgemäße Getränkesystem 1 eine Abrechnungseinrichtung 12 integriert werden. Die Abrechnungseinrichtung 12 enthält ein Display 12a und kann den Benutzer einfach über sein Gefäß 4 identifizieren oder kann eine der üblichen Kellner-Abrechnungseinrichtungen sein, die mit Schlüssel, Magnetkarte, PIN-Code oder dgl. funktionieren und zusätzlich einen Sensor 12 enthalten. Gleichzeitig wird eine Codierung 3 verwendet, die außer den dem bestimmten Getränk zuzuordnenden Informationen weitere Informationen enthält, die dem bestimmten Gefäß 4 zuzuordnen sind, so dass jeder Befüllvorgang dieses bestimmten Gefäßes 4 registriert, gespeichert, ggfs. durch einen internen Zähler gezählt und les- und abrechenbar gemacht werden kann, sowie nicht zugelassene Gefäße 4 nicht befüllt werden. Um Missbrauch zu verhindern, führt der Benutzer seine persönliche Magnetkarte, seinen persönlichen Schlüssel oder dgl. in die Abrechnungseinrichtung ein, wenn er sein Gefäß 4 befüllen will. Am Display 12a können die Anzahl der bislang eingeleiteten Befüllvorgänge des bestimmten Gefäßes 4 und gegebenenfalls der Preis bzw. die zu bezahlende Summe angezeigt werden. Die Bezüge können zu einem beliebigen Zeitpunkt ausgelesen und nach Abrechnung gelöscht werden.

Bei Verwendung immer der gleichen Individualtasse 4 kann somit der Benutzer über die Programmiereinrichtung 9 sicherstellen, dass er immer das von ihm bevorzugte Getränk in seine Tasse bekommt. Ändern sich seine Vorlieben, so kann die Zuordnung, wiederum über die Programmiereinrichtung 9, der Codierung 3 an seinem Gefäß 4 zu diesem bestimmten Getränk verändert und seinen neuen Vorlieben angepasst werden. Es ist weiterhin möglich, auf einfache Weise die Parameter der Getränkezubereitung und -ausgabe noch weiter zu individualisieren, und auf ebenfalls einfache Weise eine Abrechnung der bezogenen Getränke vorzunehmen.

Der Betrieb des erfindungsgemäßen Getränkesystems soll nachfolgend anhand von Beispielen näher erläutert werden. **Beispiel 1:** Ein erfindungsgemäßes Getränkesystem wird von einem Benutzer A mit seiner Tasse 4.A benutzt. Die Tasse 4.A ist mit einem Strichcode versehen, der Informationen über die spezielle Tasse des Benutzers A enthält, diese beispielsweise als Tasse 4.A kennzeichnet. Der Benutzer A stellt seine Tasse 4.A unter den Auslass 6 in den Bereich des Lesegerätes 8. Das Lesegerät 8 identifiziert das Gefäß 4 als Tasse 4.A, und meldet dies der Steuerung. Die Steuerung fordert den Benutzer A auf, seine Getränkewahl über die Programmierung 9 einzugeben. Der Benutzer A wählt beispielsweise eine große Portion Capuccino mit viel Milchschaum, entweder aus vorgegebenen Getränkevorschlägen oder individuell aus vorgegebenen Parameterbereichen. Dieser Getränkewunsch wird mit der Information über die Identifikation der Tasse 4.A verknüpft und abgespeichert. Jedes Mal wenn nun der Benutzer A die Tasse 4.A unter den Auslass stellt, bekommt er das einmal programmierte Getränk. Will er später Tee trinken, so wird die vorangegangene Programmierung gelöscht und die Information über die Tasse 4.A mit dem neu einprogrammierten Getränkewunsch "Tee" verknüpft.

Bei einem Getränkesystem mit Abrechnungseinrichtung kann zusätzlich verlangt werden, dass sich der Benutzer A identifiziert, beispielsweise über eine Magnetkarte oder einen Schlüssel oder dgl. Damit wird ein Konto für den Benutzer A eröffnet, auf den jeder Bezugsvorgang vermerkt wird.

**Beispiel 2:** Durch einen Benutzer B mit seiner Individualtasse 4.B wird ein Getränkesystem benutzt, das beschreibbare Codierungen, beispielsweise Transponder, verwendet. Auch hier ist der Transponder wieder an der Tasse 4.B befestigt. Vor dem ersten Benutzen enthält der Transponder keinerlei Information. Der Benutzer B stellt seine Tasse 4.B unter den Auslass in den Bereich eines Schreib- oder Lesegerätes. Das Getränkesystem fordern ihn auf, seinen Getränkewunsch einzuprogrammieren. Der Benutzer B bevorzugt einen doppelten Espresso und programmiert diesen Getränkewunsch ein. Der einprogrammierte Getränkewunsch wird auf die Codierung an der Tasse 4.B geschrieben, so dass jedes Mal dann, wenn die Tasse 4.B unter den Auslass gestellt wird, ein doppelter Espresso in die Tasse 4.B gefüllt wird. Der Benutzer B möchte nach einiger Zeit nur noch Tee trinken, wobei es lediglich notwendig ist, die Programmierung auf "Tee" zu ändern, wobei die ursprüngliche Information "doppelter Espresso" durch die Information "Tee" überschrieben wird.

Die Verwendung einer Abrechnungseinrichtung erfolgt analog wie im Beispiel 1.

In Abwandlung des beschriebenen und gezeichneten Ausführungsbeispiels kann die Erfindung, wie erläutert, auch für die Ausgabe anderer Getränke als Kaffee oder Tee eingesetzt werden. Codierungen und Lesegeräte können in den unterschiedlichsten, auf dem Markt befindlichen Ausbildungen eingesetzt werden. Die Verarbeitung und Speicherung der Informationen der Codierung bzw. deren Zuordnung und Veränderung kann auch außerhalb der Steuereinrichtung für die Kaffeemaschine vorgenommen werden, so dass z.B. eine Nachrüstung bestehende Maschinen erleichtert wird. Eine Abrechnungseinrichtung kann unter Umständen entfallen, wenn der Benutzer für die Getränke nichts zahlen muss. Es können weiterhin Schnittstellen zum Anschluss an einen Drucker und/oder für eine zentrale Verarbeitung der Daten vorgesehen werden.

## Patentansprüche

1. Getränkesystem (1) mit wenigstens einem Gefäß (4), dem eine Codierung (3) zugeordnet ist, sowie mit einer Ausgabeeinrichtung (2) für ein nach wenigstens einem vorbestimmten Parameter im Hinblick auf ein Ausgabevolumen und/oder eine Trinkstärke und/oder ein Mischungsverhältnis zubereitetes Getränk, wobei die Ausgabeeinrichtung (2) ein Gehäuse (5), ein Lesegerät (8) für die Codierung (3), eine Steuereinheit (7) zum Steuern von Ausgabevorgängen für das Getränk, eine an der Außenseite des Gehäuses (5) vorgesehene, benutzerzugängliche Programmiereinrichtung (9), mit der die Zuordnung der Codierung (3) zu einem Getränk individuell veränderbar ist und eine Zuordnungseinrichtung (10) zum Zuordnen einer vorbestimmten Codierung (3) zu einem vorbestimmten Getränk enthält, **dadurch gekennzeichnet, dass** die Programmiereinrichtung (9) eine Wahlvorrichtung zum Verändern wenigstens eines vorbestimmten Parameters für ein vorbestimmtes Getränk aus einem Wahlbereich für diesen Parameter umfasst.

2. Getränkesystem nach Anspruch 1, **dadurch gekennzeichnet, dass** die Codierung (3) neben der einem Getränk zuordenbaren Information eine weitere, dem vorbestimmten Gefäß (4) zuordenbare Information enthält.

3. Getränkesystem nach Anspruch 1 oder 2, **dadurch gekennzeichnet, dass** eine Speichereinrichtung (11) zum Speichern der Informationen der Codierung (3) vorgesehen ist.

4. Getränkesystem nach Anspruch 2 oder 3, **dadurch gekennzeichnet, dass** eine Abrechnungseinrichtung (12) zum Feststellen der Anzahl der Befüllvorgänge für jedes vorbestimmte Gefäß (4) vorgesehen ist.

## Claims

1. Beverage system (1) having at least one vessel (4) to which a code (3) is assigned and having a dispensing device (2) for a beverage prepared according to at least one predetermined parameter with regard to dispensed volume and/or drink strength and/or mixing ratio, wherein the dispensing device (2) contains a housing (5), a reading device (8) for the code (3), a control unit (7) for controlling dispensing operations for the beverage, a user-accessible programming device (9) provided on the outside of the housing (5) by means of which the allocation of the code (3) to a beverage is individually variable, and an assignment device (10) for assigning a predetermined code (3) to a predetermined beverage, **characterised in that** the programming device (9) comprises a selection device for altering at least one predetermined parameter for a predetermined beverage from a range of choice for this parameter.

2. Beverage system according to claim 1, **characterised in that** apart from the information assignable to a beverage, the code (3) contains further information assignable to the predetermined vessel (4).

3. Beverage system according to claim 1 or 2, **characterised in that** a memory device (11) is provided for storing the information in the code (3).

4. Beverage system according to claim 2 or 3, **characterised in that** a billing device (12) is provided for establishing the number of filling operations for each predetermined vessel (4).

## Revendications

1. Système de boissons (1) comprenant au moins un récipient (4) auquel un code (3) est attribué, et comprenant en outre un dispositif distributeur (2) pour une boisson préparée selon au moins un paramètre prédéterminé concernant un volume de distribution et/ou une intensité de boisson et/ou une proportion de mélange, où le dispositif distributeur (2) comprend un logement (5), un appareil de lecture (8) pour le code (3), une unité de commande (7) pour la commande d'opérations de distribution de la boisson, un dispositif de programmation (9) prévu sur le côté extérieur du logement (5), accessible aux utilisateurs, avec lequel l'attribution du code (3) à une boisson peut être modifiée individuellement, et un dispositif d'attribution (10) pour l'attribution d'un code (3) prédéterminé à une boisson prédéterminée, **caractérisé en ce que** le dispositif de programmation (9) comprend un dispositif de choix pour la modification d'au moins un paramètre prédéterminé relatif à une boisson prédéterminée parmi une gamme de choix pour ce paramètre.

2. Système de boissons selon la revendication 1, **caractérisé en ce que** le code (3) contient, en complément aux informations pouvant être attribuées à une boisson, une information supplémentaire pouvant être attribuée au récipient (4) prédéterminé.

3. Système de boissons selon la revendication 1 ou 2, **caractérisé en ce qu'**il est prévu un dispositif de mémoire (11) pour la mémorisation des informations du code (3).

4. Système de boissons selon la revendication 2 ou 3, **caractérisé en ce qu'**il est prévu un dispositif de comptage (12) pour la détermination du nombre d'opérations de remplissage de chaque récipient (4) prédéterminé.
